# EUROPEAN PATENT APPLICATION

(11) **EP 4 261 982 A1**
(43) Date of publication of application: **18.10.2023**
(21) Application number: 20964605.8
(22) Date of filing: 10.12.2020
(51) Int. Cl.: H01M 10/613, H01M 10/6557

(54) **LITHIUM ION SECONDARY BATTERY AND ELECTRIC VEHICLE**

(71) Applicant: Microvast Power Systems Co., Ltd., Huzhou, Zhejiang 313000 (CN); Microvast, Inc., Stafford, TX 77477 (US)
(72) Inventor: DENG, Guoyou, Huzhou, Zhejiang 313000 (CN); JIN, Yong, Huzhou, Zhejiang 313000 (CN); SHEN, Xiaojie, Huzhou, Zhejiang 313000 (CN); ZANG, Qingfeng, Huzhou, Zhejiang 313000 (CN); ZHANG, Junli, Huzhou, Zhejiang 313000 (CN)
(74) Representative: Zaboliene, Reda
(86) International application number: PCT/CN2020/135055
(87) International publication number: WO 2022/120666

(57) **Abstract**

Provided is a lithium ion secondary battery, comprising a housing (1) and at least two cells (4) encapsulated in the housing (1). The housing (1) is provided with at least one cooling unit (2) extending along a length direction (L1) of the housing (1). The cooling unit (2) is provided with a coolant channel (21) for coolant circulation, the cooling unit (2) divides the internal space of the housing (1) into at least two accommodating cavities (12) spaced apart along a thickness direction (T1) of the housing (1). Each battery cell (4) is arranged in each accommodating cavity (12), and the cooling units (2) are in thermal conduction contact with the cells (4) in the adjacent accommodating cavities (12). By providing the cooling unit (2) in the housing (1), the heat generated by the battery cell (4) can be conducted in time, thereby quickly and effectively solving the heat dissipation problem of the battery cell (4) during charging and discharging. Also provided is an electric vehicle.

## Description

### BACKGROUND OF THE APPLICATION

### Field of the Application

The present application relates to the technical field of battery technology, and in particular, to a lithium-ion secondary battery and an electric vehicle having the lithium-ion secondary battery.

### Description of Related Art

With the application and widespread promotion of electric vehicles, batteries, as the core components of electric vehicles, have put forward higher requirements for the safety performance of batteries.

Lithium-ion batteries are widely used due to their high energy density and long service life. The capacity of lithium-ion batteries is directly proportional to the distance traveled by the vehicle, and with the increasing requirements of electric vehicles for range, the capacity of the batteries equipped is also increasing. However, as the battery capacity increases, the heat generated during charging and discharging also increases. If the heat inside the battery is not effectively removed in a timely manner, the performance of the battery will sharply decrease, and there may even be a risk of combustion and explosion.

### BRIEF SUMMARY OF THE APPLICATION

### Technical Problem

The existing technology mainly uses an air cooling system or a liquid cooling system to control the temperature of the battery, and sets up a coolant channel between battery modules or individual batteries. Through the heat exchange between the coolant channel and the battery modules or the individual batteries, the heat of the battery is transmitted to the fluid, and the heat is exported through the fluid, so as to cool the battery. However, in this structure, due to the direct contact and heat exchange between the cooling system and the battery housing, and the heat-generating source of the battery being the battery cells located inside the battery housing, the heat of the battery cells needs to be indirectly exported through the battery housing, so the heat inside the battery cannot be timely exported, resulting in low cooling efficiency of the battery.

### Technical Solution

The object of the present application is to provide a lithium-ion secondary battery, aiming to solve the shortcomings of the background technology mentioned above. By setting a cooling unit inside the housing, the heat generated by the battery cells can be timely exported, thereby quickly and effectively solving the heat dissipation problem of the battery cells during the charging and discharging process.

An embodiment of the present application provides a lithium-ion secondary battery, including a housing and at least two battery cells packaged in the housing, wherein at least one cooling unit extending along the length direction of the housing is provided in the housing, a coolant channel for circulation of a coolant is provided in the cooling unit, the cooling unit divides the internal space of the housing into at least two accommodating cavities spaced apart from each other in the thickness direction of the housing, each accommodating cavity contains a battery cell, and the cooling unit is in thermal conduction contact with the battery cells in adjacent accommodating cavities.

In an achievable way, the cooling unit is a cooling plate.

In an achievable way, the coolant channel in the cooling unit extends along the length direction of the cooling unit and is bent multiple times, or the coolant channel in the cooling unit extends along the height direction of the cooling unit and is bent multiple times.

In an achievable way, the number of the cooling unit is one, and the cooling unit is located in the middle of the thickness direction of the housing within the housing, the cooling unit divides the internal space of the housing into two accommodating cavities spaced apart from each other in the thickness direction of the housing.

In an achievable way, the number of the cooling unit is at least two, and the at least two cooling units within the housing are spaced apart from each other in the thickness direction of the housing, the at least two cooling units divide the internal space of the housing into at least three accommodating cavities spaced apart from each other in the thickness direction of the housing.

In an achievable way, the number of the cooling unit is at least three, and the at least three cooling units within the housing are spaced apart from each other in the thickness direction of the housing, the two outermost cooling units are respectively attached to the opposite inner walls of the housing.

In an achievable way, the housing has a prismatic structure and includes two opposite first side plates and two opposite second side plates, the two first side plates are spaced apart and parallel to each other in the thickness direction of the housing, the two second side plates are spaced apart and parallel to each other in the height direction of the housing, the two first side plates and the two second side plates are connected to each other, and the internal space of the housing is formed by the enclosure of the two first side plates and the two second side plates, the cooling unit is arranged parallel to the two first side plates in the housing.

In an achievable way, the housing has openings at two opposite ends in the length direction of the housing, and a first cover plate and a second cover plateare respectively sealed at the openings at the two opposite ends of the housing.

In an achievable way, the cooling unit is provided with a coolant inlet and a coolant outlet at the two opposite ends of the length direction of the cooling unit, one end of the coolant channel is connected to the coolant inlet, and the other end of the coolant channel is connected to the coolant outlet.

In an achievable way, the cooling unit is provided with connectors at both the coolant inlet and the coolant outlet, and the connectors extend outward from the two ends of the cooling unit, the first cover plate and the second cover plate are each provided with a coolant port, the connector t the coolant inlet is inserted into the coolant port on the first cover plate, and the connector at the coolant outlet is inserted into the coolant port on the second cover plate.

In an achievable way, the first cover plate and/or the second cover plate are provided with an explosion-proof valve.

In an achievable way, the first cover plate and the second cover plate are each provided with an electrode terminal, and the first cover plate and/or the second cover plate are provided with an explosion-proof groove, and the explosion-proof groove surrounds or is set partially around the electrode terminal.

Another embodiment of the present application also provides an electric vehicle, including the lithium-ion secondary battery mentioned above.

For the lithium-ion secondary battery provided in the present application, a cooling unit is provided in the housing, and a coolant channel is provided in the cooling unit, allowing the coolant to circulate along the coolant channel. Meanwhile, the cooling unit is in thermal conduction contact with adjacent battery cells. Through the heat exchange between the battery cells and the cooling unit, as well as the heat exchange between the cooling unit and the coolant, the heat of the battery cells can be transferred to the coolant, and the heat is exported to the outside of the battery through the coolant, thereby achieving the purpose of cooling the battery. This structure has high heat conduction efficiency and good cooling effect. Also, at least one cooling unit is located between two adjacent battery cells, thus enabling the timely export of heat between the two adjacent battery cells without the problem of heat accumulation between the two adjacent battery cells, thereby effectively solving the heat dissipation problem inside the battery, greatly improving the heat dissipation efficiency of the battery, and ensuring the safety performance of the battery.

### BRIEF DESCRIPTION OF THE DRAWINGS

FIG. 1 is a schematic diagram of the three-dimensional structure of a lithium-ion secondary battery in an embodiment of the present application.
FIG. 2 is a partially exploded, schematic diagram of FIG. 1.
FIG. 3 a fully exploded, schematic diagram of FIG. 1.
FIG. 4 is a schematic diagram of the structure of the first cover plate in FIG. 1.
FIG. 5 is a schematic diagram of the structure of the cooling unit in FIG. 1.
FIG. 6 is a cross-sectional schematic diagram of FIG. 5.
FIG. 7 is a schematic diagram of the structure of the cooling unit installed in the housing in FIG. 1.
FIG. 8 is a schematic diagram of the structure of the cooling unit installed in the housing in another embodiment of the present application.
FIG. 9 is a schematic diagram of the structure of the cooling unit installed in the housing in another embodiment of the present application.
FIG. 10 is a schematic diagram of the structure of the cooling unit installed in the housing in another embodiment of the present application.
FIG. 11 is a cross-sectional schematic diagram of the cooling unit in another embodiment of the present application.
FIG. 12 is a schematic diagram of the three-dimensional structure of a lithium-ion secondary battery in another embodiment of the present application.
FIG. 13 is a partially exploded, schematic diagram of FIG. 12.
FIG. 14 is a schematic diagram of the structure of the cooling unit in FIG. 12.
FIG. 15 is a schematic diagram of the structure of the cover plate in another embodiment of the present application.
FIG. 16 is a cross-sectional schematic diagram of FIG. 15 along the A-A position.
FIG. 17 is a schematic diagram of the structure of the cover plate in another embodiment of the present application.

### DETAILED DESCRIPTION OF THE APPLICATION

The following will provide a further detailed description of the specific implementations of the present application in conjunction with the accompanying drawings and embodiments. The following embodiments are used to illustrate the present application, but are not intended to limit the scope of the present application.

The terms "first", "second", "third", "fourth", etc. (if any) in the specification and claims of the present application are only used to distinguish similar objects, and are not intended to be used to describe a specific sequence or order.

The terms "up", "down", "left", "right", "front", "back", "top", "bottom" (if any) mentioned in the specification and claims of the present application are defined based on the position of the structure in the figures and the position between the structures in the figures, only for the clarity and convenience of expressing the technical solution. It should be understood that the use of these directional words should not limit the scope of protection in the present application.

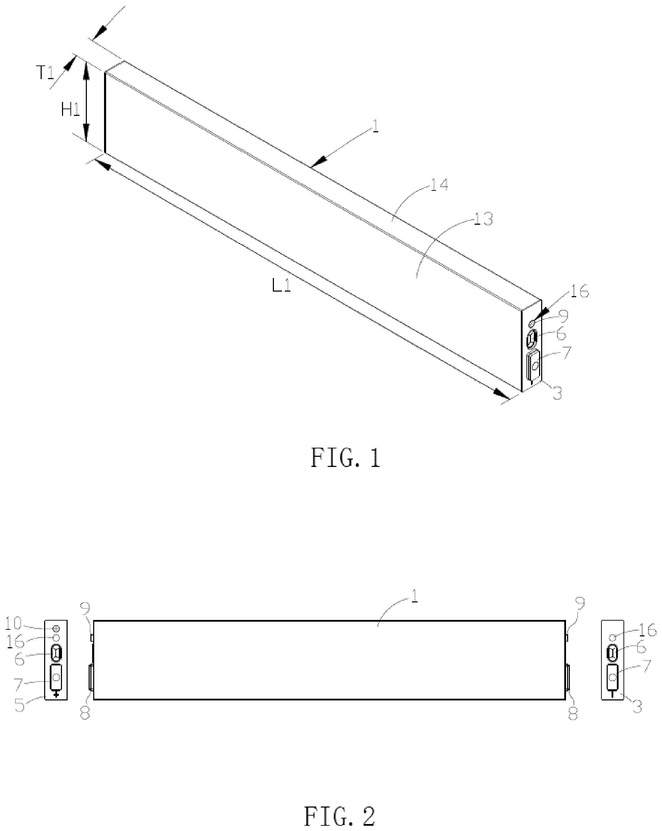

As shown in FIGs. 1 to 7, an embodiment of the present application provides a lithium-ion secondary battery. The lithium-ion secondary battery includes a housing 1 and two battery cells 4 packaged in the housing 1. The housing 1 has a prismatic structure, and has a length direction L1, a height direction H1, and a thickness direction T1. The definition of the directions is based on the orientation or positional relationship shown in the drawings, and is only for the convenience of expression and description. Therefore, it cannot be understood as a limitation of the present application. Specifically, the length value of the housing 1 along the length direction L1 is greater than its height value along the height direction H1, and the height value of the housing 1 along the height direction H1 is greater than its thickness value along the thickness direction T1, that is, the lithium-ion secondary battery is a prismatic battery and has a flat structure.

In the above embodiment, the housing 1 includes two opposite first side plates 13 and two opposite second side plates 14. The two first side plates 13 are spaced apart and parallel to each other in the thickness direction T1 of the housing 1, and the two second side plates 14 are spaced apart and parallel to each other in the height direction H1 of the housing 1. The two first side plates 13 and the two second side plates 14 are connected to each other, and the internal space of the housing 1 is formed by the enclosure of the two first side plates 13 and the two second side plates 14. The cooling unit 2 is arranged parallel to the two first side plates 13 in the housing 1.

In the above embodiment, a cooling unit 2 is provided inside the housing 1, and the cooling unit 2 is located in the middle of the thickness direction T1 of the housing 2. The cooling unit 2 extends along the length direction L1 of the housing 1. A coolant channel 21 for circulation of a coolant is provided in the cooling unit 2. The cooling unit 2 divides the internal space of the housing 1 into two accommodating cavities 12 spaced apart from each other in the thickness direction T1 of the housing 1. Each accommodating cavity 12 contains a battery cell 4, and the cooling unit 2 is in thermal conduction contact with the battery cells 4 in adjacent accommodating cavities 12.

Generally, the coolant can be water, ethylene glycol aqueous solution, etc.

Specifically, the battery cell 4 is formed by winding or laminating a positive electrode plate, a negative electrode plate, and a diaphragm.

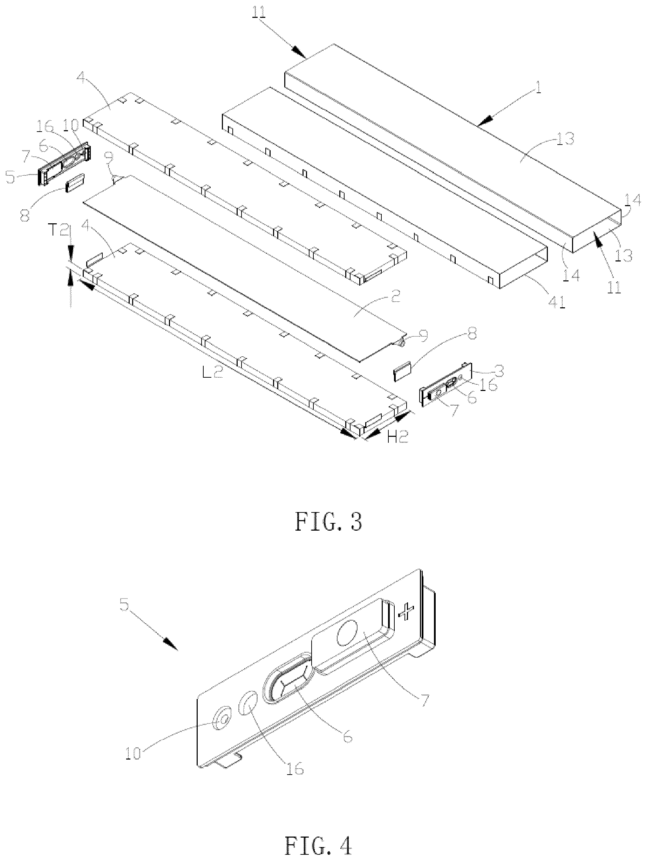

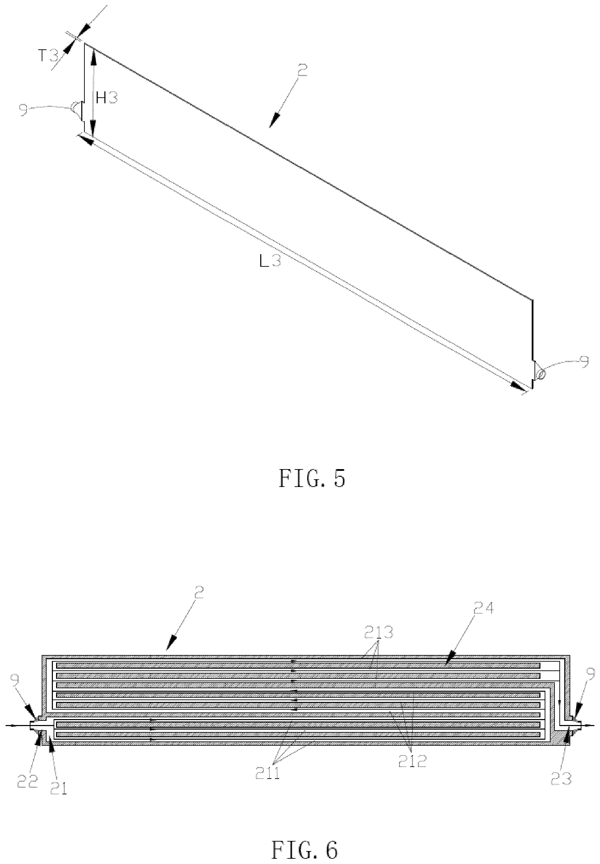

As shown in FIGs. 3 and 5, in the above embodiment, the battery cell 4 and the cooling unit 2 each have a prismatic structure. The battery cell 4 has a length direction L2, a height direction H2, and a thickness direction T2. The cooling unit 2 has a length direction L3, a height direction H3, and a thickness direction T3. The length of the cooling unit 2 is equal to the length of the battery cell 4, and the height of the cooling unit 2 is equal to the height of the battery cell 4. By setting the length and height of the cooling unit 2 to be the same as the length and height of the battery cell 4, and stacking the battery cells 4 and the cooling unit 2 along the thickness direction T1 of the housing 1, the contact area between the battery cells 4 and the cooling unit 2 can be maximized, thereby improving the heat transfer efficiency between the battery cells 4 and the cooling unit 2, and greatly improving the internal heat dissipation efficiency of the lithium-ion secondary battery.

As shown in FIGs. 5 and 6, in the above embodiment, the cooling unit 2 is a cooling plate structure. The cooling unit 2 is provided with a coolant inlet 22 and a coolant outlet 23 at the two opposite ends of the length direction L3 of the cooling unit 2. One end of the coolant channel 21 is connected to the coolant inlet 22, and the other end of the coolant channel 21 is connected to the coolant outlet 23.

In the above embodiment, the coolant channel 21 in the cooling unit 2 extends along the length direction L3 of the cooling unit 2 and is bent multiple times. The coolant channel 21 first extends from the coolant inlet 22 towards the coolant outlet 23, then from the coolant outlet 23 towards the coolant inlet 22, and finally from the coolant inlet 22 towards the coolant outlet 23. Of course, the coolant channel 21 may also extend along the cooling unit 2 without bending or by bending even more times, and it is not limited herein.

In the above embodiment, the coolant channel 21 includes a first passage 211, a second passage 212, and a third passage 213. The first passage 211, the second passage 212 and the third passage 213 extend along the length direction L3 of the cooling unit 2. The first passage 211 and the third passage 213 extend along the direction from the coolant inlet 22 towards the coolant outlet 23, while the second passage 212 extends along the direction from the coolant outlet 23 towards the coolant inlet 22. The first end of the first passage 211 is connected to the coolant inlet 22, the second end of the first passage 211 is connected to the first end of the second passage 212, the second end of the second passage 212 is connected to the first end of the third passage 213, and the second end of the third passage 213 is connected to the coolant outlet 23.

Specifically, in the above embodiment, the number of each of the first passage 211, the second passage 212 and the third passage 213 is three. The three first passages 211 are arranged in parallel. The three second passages 212 are arranged in parallel. The three third passages 213 are arranged in parallel. The first ends of the three first passages 211 converge and thereafter are connected to the coolant inlet 22. The second ends of the three first passages 211 converge and thereafter are all connected to the first ends of the three second passages 212. The second ends of the three second passages 212 converge and thereafter are all connected to the first ends of the three third passages 213. The second ends of the three third passages 213 converge and thereafter are connected to the coolant outlet 23. Of course, the number of the first passages 211, the second passages 212 and the third passages 213 may be more, and it is not limited herein.

In the above embodiment, there are multiple barrier walls 24 spaced within the cooling unit 2. Each barrier wall 24 extends along the length direction L3 of the cooling unit 2. The multiple barrier walls 24 are arranged and distributed along the height direction H3 of the cooling unit 2. The coolant channel 21 is formed by dividing the internal space of the cooling unit 2 by the barrier walls 24.

Specifically, by setting multiple first passages 211, multiple second passages 212 and multiple third passages 213 in the cooling unit 2, the coolant after entering the cooling unit 2 can reach everywhere in the cooling unit 2 along the multiple first passages 211, the multiple second passages 212 and the multiple third passages 213, thus enabling the entire sidewall of the cooling unit 2 to exchange heat with the battery cells 4. Meanwhile, since the coolant can reach everywhere in the cooling unit 2, the local overheating of the cooling unit 2 is prevented, so as to avoid the uneven distribution of the local temperature of the battery cell 4 to affect the performance of the battery. Of course, the coolant channel 21 can also be of other structures and it is not limited herein.

As shown in FIGs. 1 to 4, in the above embodiment, the housing 1 is a hollow structure, and the housing 1 is provided with openings 11 at the opposite ends of the length direction L1 of the housing 1. The openings 11 at the opposite ends of the housing 1 are sealed with a first cover plate 5 and a second cover plate 3, respectively.

As shown in FIGs. 3, 5, and 6, in the above embodiment, the cooling unit 2 is provided with connectors 9 at both the coolant inlet 22 and the coolant outlet 23. The connectors 9 extend outward from the two ends of the cooling unit 2. The first cover plate 5 and the second cover plate 3 are each provided with a coolant port 16. The end of the connector 9 and the coolant port 16 are both circular structures. The connector 9 at the coolant inlet 22 is inserted into the coolant port 16 on the first cover plate 5, and the connector 9 at the coolant outlet 23 is inserted into the coolant port 16 on the second cover plate 3. The coolant flows into or out of the coolant channel 21 through the connectors 9.

Specifically, in order to circulate the coolant in the coolant channel 21, the coolant storage tank or coolant circulation system (not shown) located outside the battery module needs to be connected to both the coolant inlet 22 and the coolant outlet 23. By setting the connectors 9 at the coolant inlet 22 and the coolant outlet 23, it is convenient to connect the coolant storage tank or coolant circulation system to the cooling unit 2.

Specifically, the connector 9 is fixed to the end of the cooling unit 2 by welding.

As shown in FIGs. 1 to 4, in the above embodiment, both the first cover plate 5 and the second cover plate 3 are provided with an explosion-proof valve 6. The explosion-proof valve 6 has an elliptical structure, and the long axis of the elliptical structure of the explosion-proof valve 6 is set along the height direction H1 of the housing 1. Of course, in other embodiments, the explosion-proof valve 6 may also be installed only on the first cover plate 5 or the second cover plate 3, and it is not limited herein.

In the above embodiment, the first cover plate 5 and the second cover plate 3 are each provided with an electrode terminal 7, and two opposite ends of the housing 1 are provided with tabs 8. The two battery cells 4 are arranged in parallel, and the two battery cells 4 are electrically connected to the electrode terminals 7 through the tabs 8. One end of each tab 8 is simultaneously connected to the two battery cells 4, and the other end of the tab 8 is connected to the electrode terminal 7.

Specifically, the battery cell 4 has a positive electrode and a negative electrode. In the above embodiment, the positive and negative electrodes of the battery cell 4 are located at opposite ends of the battery cell 4, respectively. The electrode terminal 7 on the first cover plate 5 is simultaneously electrically connected to the positive electrodes of the two battery cells 4, and the electrode terminal 7 on the second cover plate 3 is simultaneously electrically connected to the negative electrodes of the two battery cells 4, so as to achieve parallel connection of the two battery cells 4.

In the above embodiment, the first cover plate 5 is provided with a liquid injection hole 10. Of course, in other embodiments, it can also be that the second cover plate 3 is provided with a liquid injection hole 10, or both the first cover plate 5 and the second cover plate 3 are provided with a liquid injection hole 10, and it is not limited herein.

In the above embodiment, a Mylar film 41 is provided in the housing 1, and the Mylar film 41 simultaneously wraps the two battery cells 4 and the cooling unit 2. Generally, the housing 1 is made of metal materials such as steel or aluminum, and the Mylar film 41 serves as insulation to prevent short circuit problem caused by direct contact between the battery cells 4 and the housing 1. Of course, in other embodiments, the two battery cells 4 may also be wrapped separately with a Mylar film 41, and it is not limited herein.

In other embodiments, the number of the cooling unit 2 can also be multiple, such as two, three, etc., and the number of the battery cell 4 can also be more, such as three, four, etc., and it is not limited herein.

The following examples illustrate the arrangement and distribution of the cooling units 2 and the battery cells 4 within the housing 1 when both cooling unit 2 and the battery cell 4 have multiple numbers.

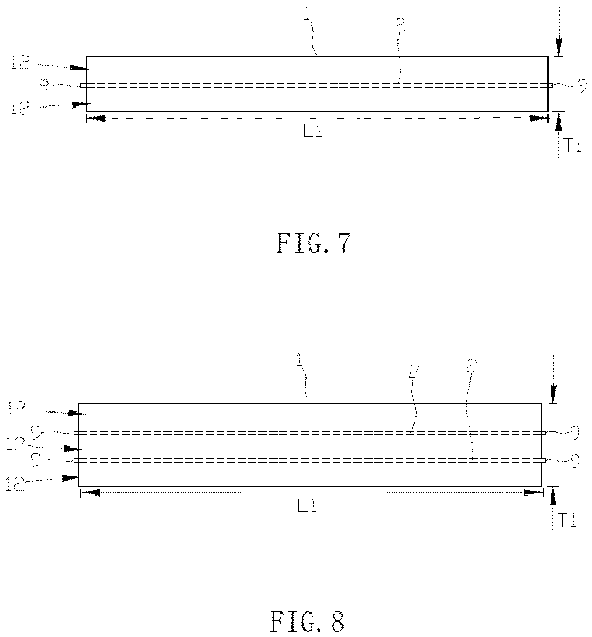

As shown in FIG. 8, another embodiment of the present application provides a lithium-ion secondary battery. Unlike the above embodiment, the number of the cooling unit 2 is different. Specifically, the number of the cooling unit 2 is two, and the two cooling units 2 within the housing 1 are spaced apart from each other in the thickness direction T1 of the housing 1. The two cooling units 2 divide the internal space of the housing 1 into three accommodating cavities 12 spaced apart from each other in the thickness direction T1 of the housing 1, and a battery cell 4 is provided in each accommodating cavity 12 (the battery cell 4 is not shown).

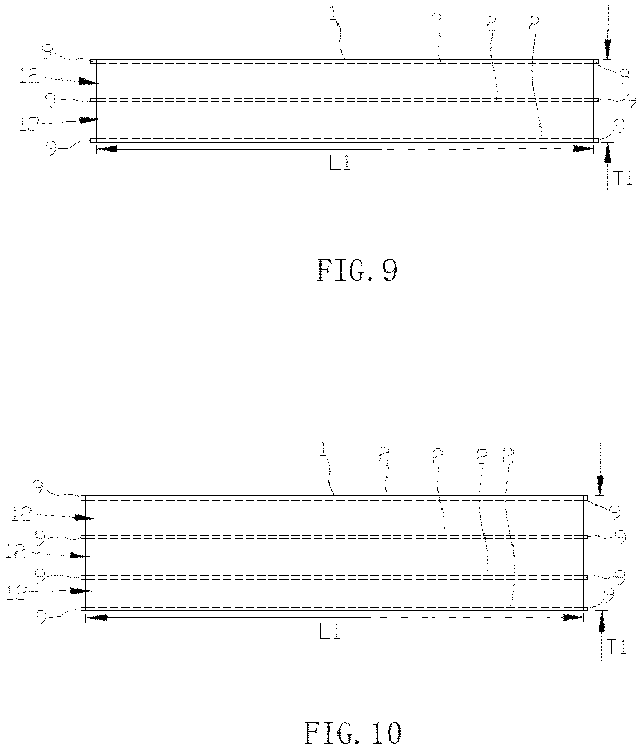

As shown in FIG. 9, another embodiment of the present application provides a lithium-ion secondary battery. Unlike the above embodiment, the number of the cooling unit 2 is different. Specifically, the number of the cooling unit 2 is three, and the three cooling units 2 within the housing 1 are spaced apart from each other in the thickness direction T1 of the housing 1. The two outermost cooling units 2 (as shown in FIG. 9, the two outermost cooling units 2 are located at the top and bottom respectively) are respectively attached to the two opposite inner walls of the housing 1. The three cooling units 2 divide the internal space of the housing 1 into two accommodating cavities 12 spaced apart from each other in the thickness direction T1 of the housing 1, and a battery cell 4 is provided in each accommodating cavity 12.

As shown in FIG. 10, another embodiment of the present application provides a lithium-ion secondary battery. Unlike the above embodiment, the number of the cooling unit 2 is different. Specifically, the number of the cooling unit 2 is four, and the four cooling units 2 within the housing 1 are spaced apart from each other in the thickness direction T1 of the housing 1. The two outermost cooling units 2 (as shown in FIG. 10, the two outermost cooling units 2 are located at the top and bottom respectively) are respectively attached to the two opposite inner walls of the housing 1. The four cooling units 2 divide the internal space of the housing 1 into three accommodating cavities 12 spaced apart from each other in the thickness direction T1 of the housing 1, and a battery cell 4 is provided in each accommodating cavity 12.

Of course, in other embodiments, the number of the cooling unit 2 and the battery cell 4 can also be more, and the present application will not provide examples one by one. Preferably, multiple battery cells 4 and multiple cooling units 2 are alternately stacked, with a cooling unit 2 located between every two adjacent battery cells 4.

Specifically, the more battery cells 4 are placed in the housing 1 of same volume size, the higher the energy density of the battery. The fewer cooling units 2 are installed in the housing 1, the smaller the space occupied by the cooling units 2 in the housing 1, the more battery cells 4 can be placed in the housing 1, and the higher the energy density of the battery, but the worse the cooling effect inside the battery, and vice versa. Generally, in order to save internal space and cost of the housing 1, only one cooling unit 2 is set between every two adjacent battery cells 4. Of course, for batteries with high heat generation, multiple cooling units 2 can also be set between every two adjacent battery cells 4, and it is not limited herein.

Meanwhile, when the number of the cooling unit 2 is one or more and the number of the battery cell 4 is multiple, at least one cooling unit 2 is located between two adjacent battery cells 4, that is, at least one cooling unit 2 is not attached to the inner wall of the housing 1. For example, when the number of the cooling unit 2 and the number of the battery cell 4 are both two, if the two cooling units 2 are respectively attached to the two opposite inner walls of the housing 1, that is, no cooling unit 2 is set between the two battery cells 4, the effect of exporting the heat between the two battery cells 4 cannot be achieved, that is, the heat inside the battery cannot be quickly exported, and the heat dissipation effect is poor.

In the embodiments of the present application, the cooling unit 2 is provided in the housing 1, and the coolant channel 21 is provided in the cooling unit 2, thus allowing the coolant to circulate along the coolant channel 21. Meanwhile, the cooling unit 2 is in thermal conduction contact with adjacent battery cells 4. Through the heat exchange between the battery cells 4 and the cooling unit 2, as well as the heat exchange between the cooling unit 2 and the coolant, the heat of the battery cells 4 can be transferred to the coolant, and the heat is exported to the outside of the battery through the coolant, thereby achieving the purpose of cooling the battery. This structure has high heat conduction efficiency and good cooling effect. Also, at least one cooling unit 2 is located between two adjacent battery cells 4, enabling the timely export of heat between the two adjacent battery cells 4 without the problem of heat accumulation between the two adjacent battery cells 4, thereby effectively solving the heat dissipation problem inside the battery and improving the safety performance of the battery.

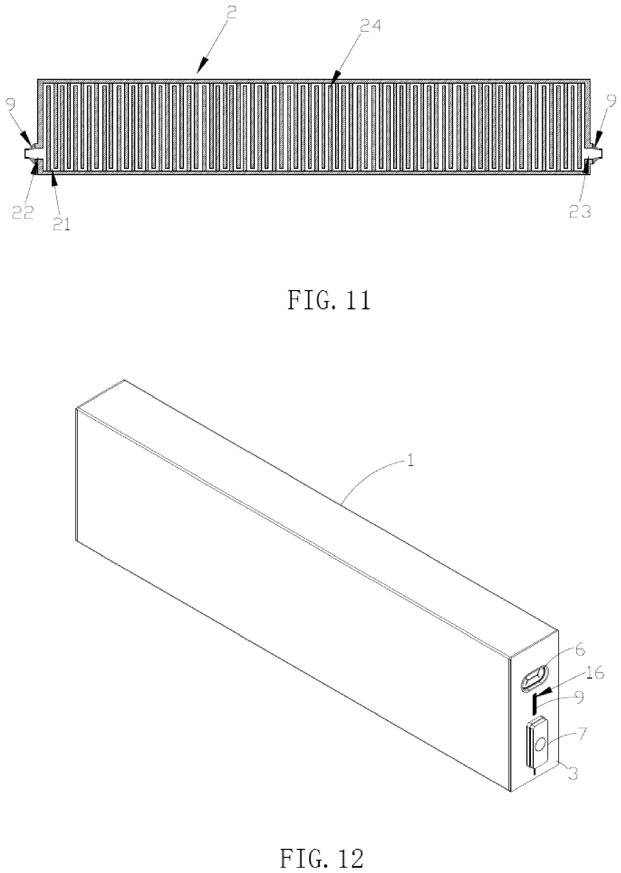

As shown in FIG. 11, another embodiment of the present application provides a lithium-ion secondary battery. Unlike the above embodiment, the structure of the coolant channel 21 in the cooling unit 2 is different. Specifically, the coolant channel 21 in the cooling unit 2 extends along the height direction H3 of the cooling unit 2 and is bent multiple times. There are multiple barrier walls 24 spaced within the cooling unit 2. Each barrier wall 24 extends along the height direction H3 of the cooling unit 2. The multiple barrier walls 24 are arranged and distributed along the length direction L3 of the cooling unit 2. The coolant channel 21 is formed by dividing the internal space of the cooling unit 2 by the barrier walls 24.

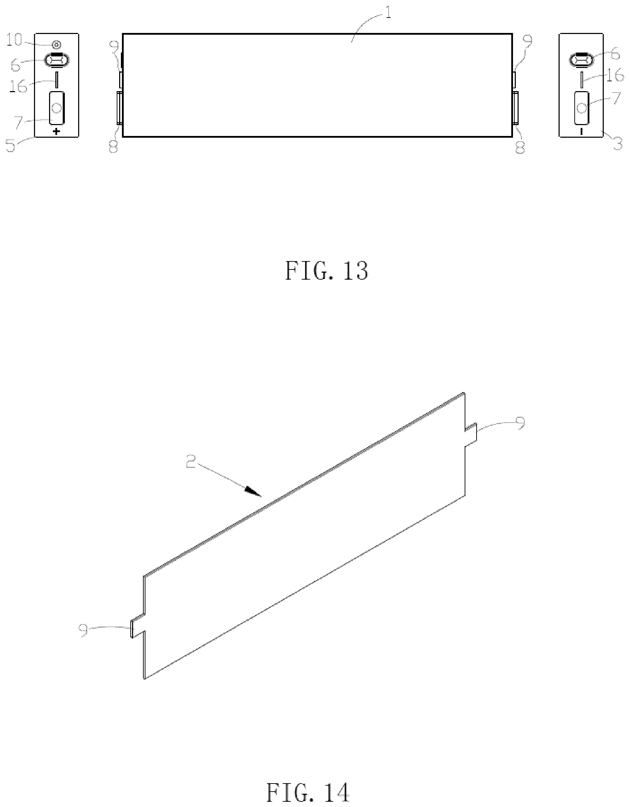

As shown in FIGs. 12 to 14, another embodiment of the present application provides a lithium-ion secondary battery. Unlike the above embodiment, the structure of the connector 9 and the coolant port 16 is different, and the shape of the explosion-proof valve 6 is different. Specifically, two opposite ends of the cooling unit 2 are each provided with a connector 9, and the connectors 9 extend outward from the two ends of the cooling unit 2. The first cover plate 5 and the second cover plate 3 are each provided with a coolant port 16. The connectors 9 and the coolant ports 16 are rectangular structures. One connector 9 is inserted into the coolant port 16 on the first cover plate 5, and the other connector 9 is inserted into the coolant port 16 on the second cover plate 3. The explosion-proof valve 6 is also an elliptical structure, but the long axis of the elliptical structure of the explosion-proof valve 6 is set along the thickness direction H1 of the housing 1 (see FIG. 1 for the thickness direction H1 of the housing 1).

Specifically, in the above embodiment, the connector 9 is integrally formed with the cooling unit 2.

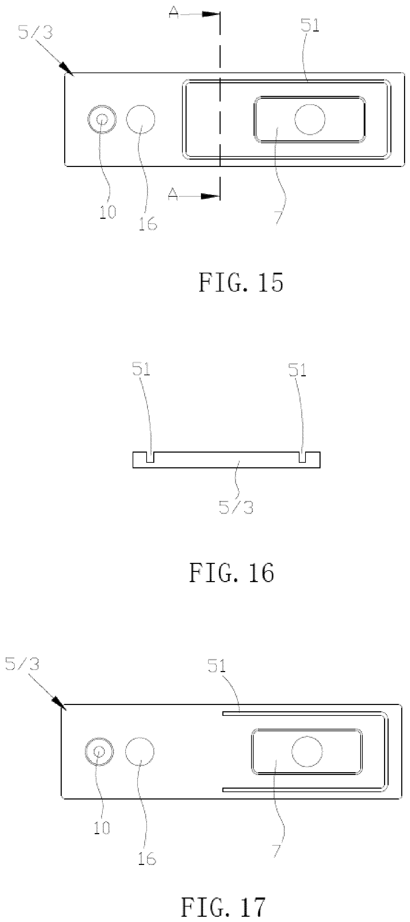

As shown in FIGs. 15 and 16, another embodiment of the present application provides a lithium-ion secondary battery. Unlike the above embodiment, the structure of the first cover plate 5 and the second cover plate 3 is different, and there is no explosion-proof valve 6 provided on the first cover plate 5 and the second cover plate 3. Specifically, in this embodiment, the first cover plate 5 and the second cover plate 3 are each provided with an electrode terminal 7, and the first cover plate 5 and/or the second cover plate 3 are provided with an explosion-proof groove 51, and the explosion-proof groove 51 surrounds the electrode terminal 7. Of course, as shown in FIG. 17, in other embodiments, the explosion-proof groove 51 may also be set partially around the electrode terminal 7.

In the above embodiment, the explosion-proof groove 51 is a rectangular structure, that is, a closed annular structure. Specifically, the closed annular structure can also be circular, triangular, and other shapes. Of course, in other embodiments, the explosion-proof groove 51 can also be a U-shaped, C-shaped, or L-shaped structure with an opening, and it is not limited herein.

In the above embodiment, the explosion-proof groove 51 is set on the outer surface of the cover plate 5/3 (i.e., the first cover plate 5 and/or the second cover plate 3). Of course, in other embodiments, the explosion-proof groove 51 can also be set on the inner surface of cover plate 5/3, and it is not limited herein.

When the battery cells 4 inside the battery abnormally generate a large amount of heat, the chemical reaction inside the battery intensifies, thus producing a large amount of gas. The internal pressure of the battery increases sharply, posing a risk of thermal runaway of the battery and even leading to battery explosion. In the embodiments of the present application, an explosion-proof groove 51 is set on the cover plate 5/3, so that the cover plate 5/3 can burst or explode along the explosion-proof groove 51 in the event of abnormal battery conditions, and the battery can quickly release pressure, thus achieving the explosion-proof function of the battery. Also, the explosion-proof groove 51 surrounds or is set partially around the electrode terminal 7, so that the cover plate 5/3 can drive the electrode terminal 7 to move together when the cover plate 5/3 bursts or explodes. The electrode terminal 7 will leave from its original position and move away from the battery cells 4, and the movement of the electrode terminal 7 will pull the tab 8, so that the tab 8 or the junction of the tab 8 (including the junction between the tab 8 and the electrode terminal 7, or the junction between the tab 8 and an electrode plate of the battery cell 4) is partially broken or completely broken, thereby weakening (the resistance will increase after the tab 8 is partially broken) or cutting off the electrical connection between the electrode terminal 7 and the battery cells 4, that is, weakening or cutting off the electrical connection between the external electrical components (not shown) and the battery cells 4, thereby effectively inhibiting the continuous heat generation inside the battery and improving the safety performance of the battery.

The above are only the specific embodiments of the present application, but the scope of protection of the present application is not limited to this. Any technical personnel familiar with this technical field who can easily think of changes or replacements within the scope of technology disclosed in the present application should be covered within the scope of protection of the present application. Therefore, the protection scope of the present application should be based on the protection scope of the claims.

### Industrial applicability

For the lithium-ion secondary battery provided in the present application, a cooling unit is provided in the housing, and a coolant channel is provided in the cooling unit, allowing the coolant to circulate along the coolant channel. Meanwhile, the cooling unit is in thermal conduction contact with adjacent battery cells. Through the heat exchange between the battery cells and the cooling unit, as well as the heat exchange between the cooling unit and the coolant, the heat of the battery cells can be transferred to the coolant, and the heat is exported to the outside of the battery through the coolant, thereby achieving the purpose of cooling the battery. This structure has high heat conduction efficiency and good cooling effect. Also, at least one cooling unit is located between two adjacent battery cells, thus enabling the timely export of heat between the two adjacent battery cells without the problem of heat accumulation between the two adjacent battery cells, thereby effectively solving the heat dissipation problem inside the battery, greatly improving the heat dissipation efficiency of the battery, and ensuring the safety performance of the battery.

## Claims

1. A lithium-ion secondary battery, comprising a housing (1) and at least two battery cells (4) packaged in the housing (1), wherein at least one cooling unit (2) extending along the length direction (L1) of the housing (1) is provided in the housing (1), a coolant channel (21) for circulation of a coolant is provided in the cooling unit (2), the cooling unit (2) divides the internal space of the housing (1) into at least two accommodating cavities (12) spaced apart from each other in the thickness direction (T1) of the housing (1), each accommodating cavity (12) contains a battery cell (4), and the cooling unit (2) is in thermal conduction contact with the battery cells (4) in adjacent accommodating cavities (12).

2. The lithium-ion secondary battery as claimed in claim **1,** wherein the cooling unit (2) is a cooling plate.

3. The lithium-ion secondary battery as claimed in claim **1,** wherein the coolant channel (21) in the cooling unit (2) extends along the length direction (L3) of the cooling unit (2) and is bent multiple times, or the coolant channel (21) in the cooling unit (2) extends along the height direction (H3) of the cooling unit (2) and is bent multiple times.

4. The lithium-ion secondary battery as claimed in claim **1,** wherein the number of the cooling unit (2) is one, and the cooling unit (2) is located in the middle of the thickness direction (T1) of the housing (1) within the housing (1), the cooling unit (2) divides the internal space of the housing (1) into two accommodating cavities (12) spaced apart from each other in the thickness direction (T1) of the housing (1).

5. The lithium-ion secondary battery as claimed in claim **1,** wherein the number of the cooling unit (2) is at least two, and the at least two cooling units (2) within the housing (1) are spaced apart from each other in the thickness direction (T1) of the housing (1), the at least two cooling units (2) divide the internal space of the housing (1) into at least three accommodating cavities (12) spaced apart from each other in the thickness direction (T1) of the housing (1).

6. The lithium-ion secondary battery as claimed in claim **1,** wherein the number of the cooling unit (2) is at least three, and the at least three cooling units (2) within the housing (1) are spaced apart from each other in the thickness direction (T1) of the housing (1), the two outermost cooling units (2) are respectively attached to the opposite inner walls of the housing (1).

7. The lithium-ion secondary battery as claimed in claim **1,** wherein the housing (1) has a prismatic structure and comprises two opposite first side plates (13) and two opposite second side plates (14), the two first side plates (13) are spaced apart and parallel to each other in the thickness direction (T1) of the housing (1), the two second side plates (14) are spaced apart and parallel to each other in the height direction (H1) of the housing (1), the two first side plates (13) and the two second side plates (14) are connected to each other, and the internal space of the housing (1) is formed by the enclosure of the two first side plates (13) and the two second side plates (14), the cooling unit (2) is arranged parallel to the two first side plates (13) in the housing (1).

8. The lithium-ion secondary battery as claimed in claim **1,** wherein the housing (1) has openings (11) at two opposite ends in the length direction (L1) of the housing (1), and a first cover plate (5) and a second cover plate (3) are respectively sealed at the openings (11) at the two opposite ends of the housing (1).

9. The lithium-ion secondary battery as claimed in claim **8,** wherein the cooling unit (2) is provided with a coolant inlet (22) and a coolant outlet (23) at the two opposite ends of the length direction (L3) of the cooling unit (2), one end of the coolant channel (21) is connected to the coolant inlet (22), and the other end of the coolant channel (21) is connected to the coolant outlet (23).

10. The lithium-ion secondary battery as claimed in claim **9,** wherein the cooling unit (2) is provided with connectors (9) at both the coolant inlet (22) and the coolant outlet (23), and the connectors (9) extend outward from the two ends of the cooling unit (2), the first cover plate (5) and the second cover plate (3) are each provided with a coolant port (16), the connector (9) at the coolant inlet (22) is inserted into the coolant port (16) on the first cover plate (5), and the connector (9) at the coolant outlet (23) is inserted into the coolant port (16) on the second cover plate (3).

11. The lithium-ion secondary battery as claimed in claim **8,** wherein the first cover plate (5) and/or the second cover plate (3) are provided with an explosion-proof valve (6).

12. The lithium-ion secondary battery as claimed in claim **8,** wherein the first cover plate (5) and the second cover plate (3) are each provided with an electrode terminal (7), and the first cover plate (5) and/or the second cover plate (3) are provided with an explosion-proof groove (51), and the explosion-proof groove (51) surrounds or is set partially around the electrode terminal (7).

13. An electric vehicle, comprising the lithium-ion secondary battery as claimed in any one of claims **1** to **12.**
